# FASCICULE DE BREVET EUROPEEN

(11) **EP 3 074 639 B1**
(45) Date de publication et mention de la délivrance du brevet: **05.02.2020**
(21) Numéro de dépôt: 14821734.2
(22) Date de dépôt: 24.11.2014
(51) Int. Cl.: F01D 5/06, F04D 29/32, F01D 5/30

(54) **SOUFFLANTE, EN PARTICULIER POUR UNE TURBOMACHINE, ET FLASQUE POUR LADITE SOUFFLANTE**
GEBLÄSE, INSBESONDERE FÜR EINE TURBOMASCHINE, SOWIE FLANSCH DAFÜR
FAN, IN PARTICULAR FOR A TURBO ENGINE, AND FLANGE FOR SAID FAN

(30) Priorité: 29.11.2013 FR 1361906
(43) Date de publication de la demande: 05.10.2016
(73) Titulaire: Safran Aircraft Engines, 75015 Paris (FR)
(72) Inventeur: PERDRIGEON, Christophe, F-77550 Moissy Cramayel Cedex (FR); JABLONSKI, Laurent, F-77550 Moissy Cramayel Cedex (FR); JOLY, Philippe, Gérard, Edmond, F-77550 Moissy Cramayel Cedex (FR)
(74) Mandataire: Pichat, Thierry
(86) Numéro de dépôt international: PCT/FR2014/053017
(87) Numéro de publication internationale: WO 2015/079154

(56) Documents cités:
- EP-A1- 1 972 757
- EP-A1- 1 995 467
- EP-A1- 2 128 450
- EP-A2- 1 357 254
- FR-A1- 2 971 822

## Description

La présente invention concerne l'obtention d'un dimensionnement particulier d'une soufflante, en particulier pour une turbomachine, telle qu'un turboréacteur.

L'invention relève d'un réel défi technique, et présente un intérêt tout particulier lorsqu'elle concerne des turbomachines dont les dimensions extérieures ont été prévues pour s'adapter au domaine de l'aviation d'affaire. Typiquement, ces turbomachines, de relativement petite taille, présentent un diamètre d'entrée, défini par le diamètre en amont de la veine de turbomachine, compris entre 900 mm et 1550 mm, afin de présenter des dimensions étroitement liées à une masse totale et adaptées à un montage sur des avions de type jets d'affaire.

Comme sur tout type de turbomachine, les développements concernant ce type de turbomachine de petite taille portent essentiellement sur l'amélioration des performances, une réduction de la consommation et un gain en masse. Les axes de développement sont en ce sens nombreux et peuvent par exemple concerner des choix de matériaux, l'étude des formes des aubes, une optimisation des liaisons mécaniques entre les pièces, la prévention des fuites, etc.

Un des axes de développement généralement suivi consiste en la réduction du rapport de moyeu de la soufflante de turbomachine. Ce rapport de moyeu est le rapport entre le diamètre externe du moyeu en bord d'attaque des aubes de soufflante, et le diamètre du cercle ou passent les extrémités radiales de ces aubes de soufflante. La diminution du rapport de moyeu implique généralement une diminution radiale de la taille de moyeu, et donc un gain de masse, mais implique aussi une augmentation de la section d'aspiration de la turbomachine, impliquant une augmentation du débit d'air propulsant la turbomachine, et donc un gain de performances. Toutefois, compte tenu du savoir faire actuel dans la conception et la fabrication des turbomachines de petite taille, telles que celles possédant un diamètre d'entrée défini ci-dessus, ce type de turbomachine est considéré comme n'autorisant pas une réduction du diamètre externe du moyeu, particulièrement en bord d'attaque des aubes de soufflante, au dessous du diamètre actuellement utilisé qui est typiquement compris entre 570 et 585 mm. En effet, les dimensions actuelles des éléments mécaniques composant le moyeu sont considérées comme non réductibles, principalement pour des considérations évidentes de tenue mécanique radiale des aubes, de résistance en torsion, de tolérances et de méthodes de fabrication, d'accessibilité par les outils, etc.

Allant à l'encontre de ces préjugés techniques, l'invention propose un choix de dimensionnement particulier d'une soufflante de turbomachine offrant un gain notable en performances et en masse.

A cet effet, l'invention propose une soufflante définie par la revendication 1.

Il est plus particulièrement proposé un diamètre d'entrée de valeur comprise entre 900 mm et 1200 mm, afin de procurer des résultats encore plus avantageux en termes de masse. Comme il sera expliqué par la suite, le choix particulier d'un tel diamètre externe est l'objet d'un préjugé technique d'autant plus important.

De plus, l'invention propose un agencement mécanique spécifique du rotor de cette soufflante qui est particulièrement bien adapté à ce choix de dimensionnement.

Généralement, le rotor d'une soufflante d'une turbomachine comporte un disque portant à sa périphérie externe des aubes dont les pieds sont engagés dans des rainures sensiblement axiales de la périphérie externe du disque. Les aubes sont retenues radialement sur le disque par coopération de formes de leurs pieds avec les rainures du disque, les pieds d'aubes étant par exemple du type en queue d'aronde. Des plates-formes inter-aubes sont montées sur le disque entre les aubes de soufflante. Le disque est généralement équipé de poireaux d'équilibrage s'étendant radialement vers l'intérieur.

Dans la technique actuelle, les aubes sont maintenues axialement sur le disque par des moyens qui sont montés sur le disque, en amont et en aval des aubes, et qui empêchent les pieds d'aube de se déplacer axialement dans les rainures du disque.

Les moyens de maintien situés en aval des aubes comprennent par exemple au moins un crochet du pied d'aube qui est engagé dans une encoche usinée sur une partie d'extrémité amont du compresseur basse pression agencé en aval de la soufflante. Afin de permettre le montage de ces crochets dans les encoches du compresseur basse pression, il est nécessaire d'agrandir radialement les rainures du disque par rapport aux pieds d'aubes. Ainsi, il est possible de déplacer axialement les aubes au fond des rainures et de positionner les crochets des pieds d'aube en alignement radial en regard des encoches. On peut ensuite surélever radialement les aubes dans les rainures à l'aide de cales suffisamment épaisses, agencées au fond des rainures, afin d'engager les crochets des pieds d'aubes dans les encoches et de maintenir les aubes en position haute.

Les moyens de maintien situés en amont comprennent par exemple un flasque annulaire rapporté et fixé sur l'extrémité amont du disque. Le flasque est monté coaxialement sur le disque et comporte une partie festonnée coopérant avec une partie festonnée correspondante du disque. Ce flasque bloque axialement la bague sur le disque et est immobilisé en rotation par rapport au disque. La périphérie externe du flasque prend appui axialement sur les pieds d'aube pour leur retenue axiale vers l'aval, sa périphérie interne étant appliquée et fixée sur une bride annulaire correspondante du disque. La périphérie externe du flasque comporte en outre des pions d'accrochage des extrémités amont des plates-formes inter-aubes.

Une virole de forme sensiblement tronconique montée sur le disque, en amont des aubes, délimite intérieurement la veine annulaire d'entrée d'air dans la turbomachine. Cette virole comporte au voisinage de son extrémité aval une bride annulaire radialement interne qui est appliquée axialement sur le flasque précité et qui est fixée avec le flasque sur la bride du disque par des boulons.

Un capot tronconique est en outre monté sur la virole précitée, à la partie amont de celle-ci, par l'intermédiaire d'autres boulons, engagés dans des trous des brides du capot et de la virole et qui sont situés radialement à l'intérieur des boulons de fixation de la virole sur le disque.

Une telle structure ne peut pas être utilisée quand la soufflante présente un petit diamètre. En effet, l'espace radial n'est pas suffisant pour loger l'ensemble des boulons et des brides précitées. En particulier, il est difficile de loger les boulons et les brides servant à la fixation du capot sur la virole.

En outre, le disque est fixé à un arbre d'entraînement par l'intermédiaire d'écrous vissés sur l'arbre par l'intermédiaire de brides radiales. Pour réaliser le montage et le démontage du rotor de soufflante, il est nécessaire de pouvoir accéder axialement à ces écrous avec un outil. Pour cela, l'opérateur doit disposer d'un espace suffisant autour de l'axe central.

Dans le cas où la soufflante est de petit diamètre, la structure décrite ci-dessus de l'art antérieur ne permet pas d'accéder aux moyens de fixation précités du disque sur l'arbre.

L'art antérieur n'autorise donc pas, en conformité avec le préjugé technique évoqué, à former une soufflante de dimension et de rapport de moyeu définis par l'invention.

Le document EP 1 357 254 divulgue également un rotor de soufflante dont la structure présente un encombrement radial et axial important.

Le document WO 2012/114032 présente une structure conforme au préambule de la revendication 1, qui autorise la réalisation d'une soufflante compacte de petit diamètre, en utilisant un anneau fixé au disque et possédant des dents axiales d'anti-rotation du flasque. Cependant, cette structure n'est pas parfaite en termes de masse globale et de stabilité du flasque, ce qui induit que le maintien axial des aubes opéré en amont n'est pas optimale et complètement efficace. De plus, cette structure n'est pas adaptée lorsque le disque, pour des raisons d'optimisation et de diminution d'encombrement, comprend une bride amont s'étendant vers l'intérieur pour le boulonnage du capot tronconique et le boulonnage d'un anneau de blocage en rotation du flasque de retenue axial des aubes.

Apporter une solution simple, efficace et économique à ce problème est un but ici recherché, y compris en tant que tel, éventuellement indépendamment des contraintes de diamètre d'entrée et de rapport de moyeu précités et revendiqués.

A cet effet, il est proposé qu'il soit prévu un capot annulaire monté sur le disque en amont des aubes, et des moyens de retenue axiale des aubes sur le disque comportant un flasque monté dans une gorge annulaire du disque et formant un appui axial des pieds des aubes, le flasque comportant un rebord annulaire radial festonné et coopérant avec un rebord annulaire radial festonnée de la gorge annulaire du disque, de manière à assurer un blocage axial du flasque dans la gorge annulaire du disque, et des moyens d'immobilisation en rotation du flasque, comportant un anneau pourvu d'oreilles s'étendant radialement vers l'intérieur et formées avec des moyens de fixation sur une face radiale amont du disque, ledit capot étant fixé sur le disque par des moyens de fixation communs aux moyens de fixation d'au moins certaines oreilles de l'anneau sur le disque, caractérisé en ce que ledit anneau comporte en outre au moins une saillie radiale coopérant avec une butée complémentaire du flasque, de manière à bloquer en rotation le flasque par rapport à l'anneau.

La structure définie ci-dessus autorise un montage plus compact que dans l'art antérieur, ce qui autorise une localisation et une concentration radialement plus externe des moyens de fixation entre le capot, le flasque et le disque, pour une plus grande flexibilité de conception de la turbomachine environnante. De plus, l'anneau de fixation utilisé dans l'invention décrite ci-dessus possède une masse plus réduite que l'anneau utilisé dans le document WO 2012/114032, car il ne comprend pas de dents s'étendant axialement vers l'aval.

Selon un mode de réalisation particulier, le disque comprend une bride amont s'étendant vers l'intérieur, et comportant des trous alignés avec des trous des oreilles pour le passage de vis axiales de fixation de l'anneau sur le disque. Les vis assurent une fixation rigide assurant l'anti-rotation entre l'anneau et le disque.

Avantageusement, l'anneau comprend une partie cylindrique à partir de laquelle les saillies radiales s'étendent radialement vers l'extérieur, les oreilles s'étendant radialement vers l'intérieur depuis le bord amont de la partie cylindrique, la partie cylindrique de l'anneau étant en appui radial sur ladite bride du disque.

Ainsi, l'anneau épouse la forme de la bride où elle est fixée pour une diminution de l'encombrement nécessaire à la fixation de l'anneau sur le disque.

Préférentiellement, les butées du flasque coopérant avec les saillies radiales de l'anneau sont formées par des festons ménagés sur un bord amont du flasque.

Le flasque maintenu en appui axial sur les aubes à son bord aval est ainsi maintenu fixe en rotation à son bord amont par les saillies de l'anneau. Ce maintien assuré à chaque bord du flasque lui confère une stabilité plus importante que les flasques utilisés dans l'art antérieur.

Selon une autre caractéristique, un des festons est ménagé sur le bord amont du flasque, en alignement axial avec chaque nervure du disque. Les festons peuvent de plus n'être ménagés que dans l'alignement de ces nervures. Cela confère un meilleur équilibrage en rotation du rotor de soufflante.

Avantageusement, une saillie radiale de l'anneau est insérée tous les deux festons du flasque. Cela suffit à assurer l'anti-rotation du flasque tout en diminuant la masse de l'anneau.

Selon encore une autre caractéristique, le capot comporte, dans sa partie médiane, un rebord annulaire interne dans lequel sont formés des trous borgnes axiaux débouchant vers l'aval et servant au logement des têtes des vis de fixation de l'anneau sur le disque, et des trous axiaux traversants pour le passage de vis de fixation commune du capot et de l'anneau sur le disque.

De cette manière, certaines oreilles de l'anneau sont traversées par des vis servant à la fixation du capot et de l'anneau sur le disque et d'autres oreilles de l'anneau sont traversées par des vis servant uniquement à la fixation de l'anneau sur le disque. En outre, dans le cas où le capot est réalisé en un matériau léger tel que de l'aluminium, il existe un risque d'arrachage de ce dernier, par exemple en cas d'ingestion d'un oiseau dans la soufflante. Dans un tel cas, l'arrachage du capot ne peut pas entraîner la désolidarisation de l'anneau et du disque. En effet, l'arrachage du capot n'a pas d'effet sur les vis servant uniquement à la fixation de l'anneau et du disque. On évite ainsi toute sortie du flasque de maintien axial des aubes et donc toute éjection accidentelle d'une ou des aubes de la soufflante.

Préférentiellement, les vis de fixation de l'anneau sur le disque sont en alternance avec les vis de fixation commune du capot et de l'anneau sur le disque.

Dans un mode de réalisation, un pion d'indexage est monté dans un des trous alignés de l'anneau et du disque et comprend une tête amont reçue dans un trou borgne du rebord radial interne du capot. Ce pion d'indexage procure un repère angulaire entre l'anneau et le disque utile lors du démontage et du montage du rotor de soufflante.

Est également concerné une turbomachine, comportant un rotor de soufflante tel que décrit ci-dessus.

Il est en outre proposé que la soufflante comprenant ladite partie cylindrique telle que décrite précédemment comporte une face cylindrique interne et une face cylindrique externe à partir de laquelle plusieurs dites saillies radiales s'étendent régulièrement radialement vers l'extérieur, chaque oreille étant localisée sensiblement entre chaque couple de saillies adjacentes.

Est enfin concerné un flasque annulaire destiné à un rotor de soufflante tel que décrit précédemment, le flasque annulaire comprenant une paroi sensiblement tronconique d'épaisseur variable, dont l'extrémité de diamètre le plus grand est reliée à un rebord annulaire s'étendant vers l'intérieur et étant festonné régulièrement, et dont l'extrémité de diamètre le plus petit est festonnée régulièrement.

Le rotor de soufflante décrit ci-dessus, dont la conception particulière découle directement du choix de rapport de moyeu effectué dans le cadre de la réalisation de turbomachine de petite taille, présente de plus un effet technique inattendu et particulièrement avantageux, dans le cadre de contexte technique décrit ci-après.

Le choix particulier du rapport de moyeu évoqué dans cette demande de brevet implique en effet une réduction générale des dimensions du disque de soufflante de la turbomachine par rapport à l'art antérieur. Ce disque présente un diamètre externe dont la valeur est alors typiquement comprise entre 245 et 275 mm. Il reste cependant nécessaire que ce disque réponde aux contraintes relatives au maintien en fonctionnement des aubes de soufflante, dont le nombre et les dimensions restent relativement identiques par rapport à l'art antérieur. A cet effet le nombre d'aube est préférentiellement compris entre 17 et 21 aubes, et plus particulièrement entre 18 et 20 aubes. La hauteur et la largeur des rainures du disque, doivent de plus, selon les connaissances de la technique actuelle, ne pas subir de réduction de dimensions, afin d'une part de permettre l'engagement des crochets aval de maintien axial des aubes évoqués dans cette demande, et d'autre part d'être adaptées à la taille des pieds d'aube dont les dimensions n'ont pas été réduites afin de supporter les aubes en rotation.

Les exigences simultanées de conservation des dimensions des rainures du disque, et de réduction du diamètre général du disque, impliquent alors forcément une diminution de la largeur, c'est-à-dire de la dimension circonférentielle, des nervures du disque. Les nervures du disque de soufflante, alors plus fines que dans l'art antérieur proposant un rapport de moyeu plus élevé, présentent de ce fait une plus grande fragilité et un plus grand risque de rupture, par rapport au couple supporté en fonctionnement, que les nervures de l'art antérieur.

Afin de remédier à ce problème, il a été conseillé de former le disque de soufflante en un alliage d'inconel, très résistant. Cet alliage est toutefois très lourd, ce qui nuit aux performances globales de la turbomachine, et ne constitue donc pas une solution satisfaisante.

Dans le cadre du rotor de soufflante décrit ci-dessus, il a été remarqué, de manière inattendue, que le blocage axial des aubes opéré par le flasque de rétention de l'invention était suffisamment efficace et résistant pour se passer du blocage axial opéré par les crochets aval des pieds d'aube engagés dans le compresseur basse-pression, au regard d'une turbomachine dont les dimensions ont été précisées précédemment. Les inventeurs ont donc avantageusement supprimé le crochet aval, et ont par conséquent eu la possibilité de réduire la hauteur radiale des rainures du disque de soufflante, dont une part était précédemment réservée au montage des crochets aval, à une hauteur typiquement comprise entre 18 et 22 mm.

Encore un autre aspect du présent sujet concerne les cales qui sont alors utilisées en fonds de rainures pour maintenir les aubes en hauteur contre les nervures. Ces cales doivent alors assurer les fonctions consistant à limiter le débattement des pieds d'aube dans les rainures en fonctionnement, à protéger les fonds des rainures, et à amortir les aubes en cas de leur rupture ou lors de l'ingestion d'un corps volumineux par la turbomachine. Afin de respecter ces contraintes de façon optimale, notamment dans le nouveau contexte décrit ci-dessus, les cales retenues ici ont été radialement amincies par rapport aux solutions préexistantes, et présente individuellement une épaisseur radiale typiquement comprise entre 1 et 3 mm, et plus particulièrement égale à 2 mm, étant précisé que de telles cales pourraient être prévues même hors des contraintes de diamètre d'entrée et de rapport de moyeu précitées et revendiquées. Chaque cale se présente plus particulièrement sous la forme d'une planche à deux faces, allongée selon l'axe de la soufflante et posée contre le fond d'une des rainures. Cette cale est symétrique dans les trois directions axiales, radiales, et circonférentielle, ce qui évite d'éventuelles erreurs de montage. Chaque face de la cale possède de préférence des bords latéraux, ou circonférentiels, chanfreinés, les chanfreins formant chacun un angle de 10°, plus ou moins 2°, avec une face. Les chanfreins de chaque face radialement en vis-à-vis se rejoignent aux extrémités latérales de la cale de manière à former les deux bords latéraux de la cale. Les angles de jonction entre les faces de la cale et les chanfreins sont de préférence adoucis de manière à présenter une courbure de rayon compris entre 1,50 mm et 1, 80 mm, et plus particulièrement égal à 1,65 mm, et les angles de jonctions entre les chanfreins formant les bords latéraux de la cale sont de préférence adoucis de manière à présenter une courbure de rayon compris entre 0,45 mm et 0,75 mm, et plus particulièrement égal à 0,6 mm. Chaque cale possède de préférence une dimension latérale comprise entre 17,0 mm et 18,2 mm, et plus particulièrement égal à 17,6 mm.

La réduction de la dimension radiale des rainures implique directement une réduction radiale des nervures, dont les proportions sont alors plus compactes et résistent mieux aux couples de flexion en fonctionnement. Grâce à la solution ici présentée, la structure des nervures du disque de soufflante offre une structure suffisamment résistante pour être formée en alliage de titane bien plus léger qu'un alliage d'inconel.

Il est ainsi possible de proposer un rotor de soufflante dépourvu de moyens de rétention axiale des aubes de soufflante sur le disque de soufflante, en aval des aubes. Ce rotor de soufflante comprend seulement comme moyen de rétention axiale des aubes le flasque amont tel que décrit dans la présente demande de brevet. Cette particularité est particulièrement pertinente dans le cadre de soufflantes pour turbomachines de petites tailles relatives à l'invention, et présentant les dimensions et le rapport de moyeu décrit précédemment. On propose donc ici, pour ce type de soufflante, de former le disque de soufflante en alliage de titane, plus particulièrement un alliage de type TA6V ou TI17 (TA5CD4).

En outre, la réduction de dimension radiale des rainures du disque de soufflante autorise à former la face interne de ce disque, avec un profil d'équilibrage issu d'un alésage de forme tronconique coaxial à l'axe de la soufflante, et dont le rayon augmente d'amont en aval. Ce profil d'équilibrage, en plus de bien équilibrer le disque de soufflante, présente un diamètre minimum, en amont, de valeur typiquement comprise entre 120 et 140 mm, ce qui est plus grand que le diamètre minimum du profil d'équilibrage à poireaux utilisé pour les rainures de plus grande hauteur, à diamètre externe du disque équivalent. Ce nouveau profil d'équilibrage du disque offre un plus grand espace annulaire au milieu du disque de soufflante pour le passage axial d'outils nécessaires au montage et au serrage des moyens de fixation du disque de soufflante sur l'arbre de la turbomachine, ces moyens étant disposés en aval du disque.

Les différents aspects des solutions ici présentées seront mieux compris et d'autres détails, caractéristiques et avantages de ceux-ci apparaîtront plus clairement à la lecture de la description qui suit faite à titre d'exemple non limitatif et en référence aux dessins annexés, dans lesquels :
- la figure 1 est une vue en perspective avec arrachage partielle d'une turbomachine selon la technique antérieure,
- la figure 2 est une demi-vue schématique partielle en coupe axiale d'un rotor de soufflante de turbomachine selon la technique antérieure,
- la figure 3 est une vue en perspective d'un rotor de soufflante actualisé avec arrachage du capot,
- la figure 4 est vue de l'avant et avec arrachage du capot,
- les figures 5, 6 et 7 sont des vues respectives des coupes A-A, B-B et C-C de la figure 4,
- la figure 8 est une demi-vue schématique partielle en coupe axiale, à l'échelle, d'une soufflante de turbomachine selon l'invention,
- la figure 9 est une vue en perspective d'une cale utilisée dans la soufflante selon l'invention,
- la figure 10 est une vue en coupe transversale de la même cale.

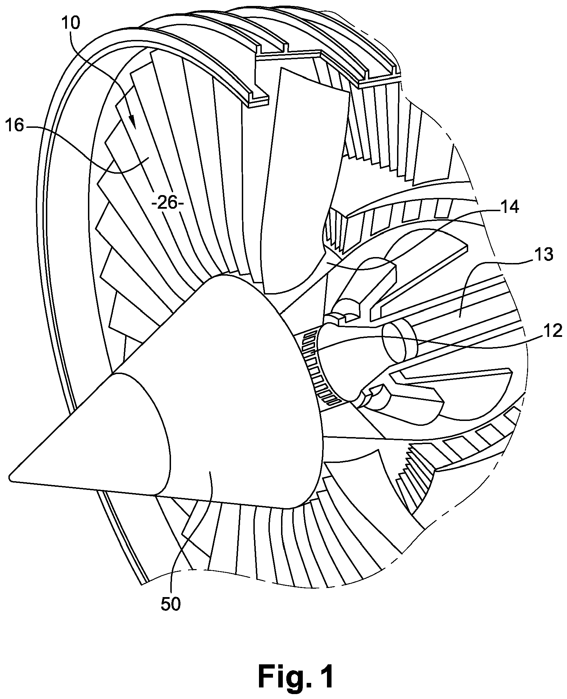

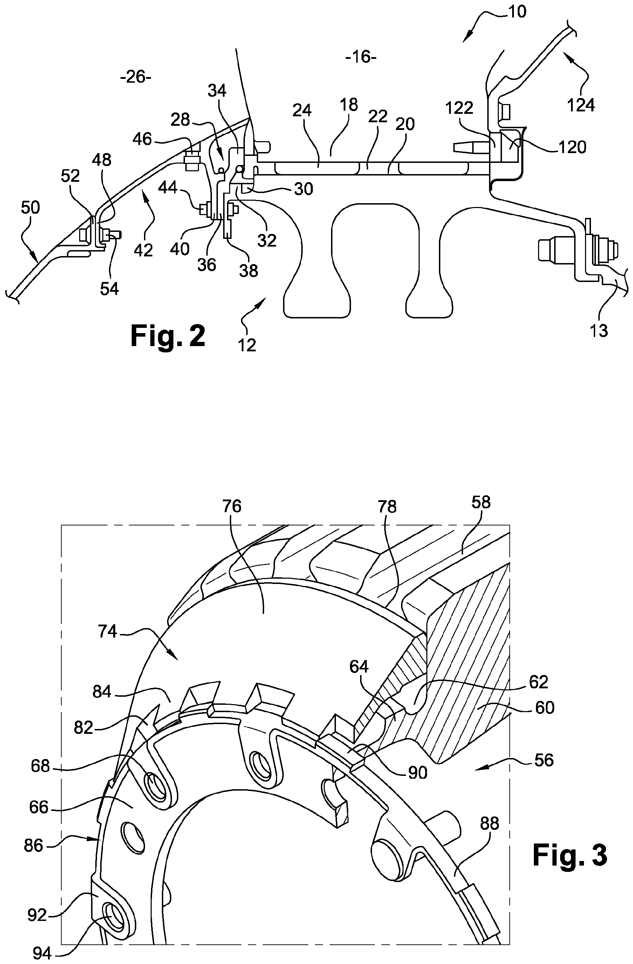

On se réfère d'abord aux figures 1 et 2 qui représentent donc une soufflante de turbomachine selon la technique antérieure à la présente invention.

Cette soufflante comprend des aubes 10 portées par un disque 12 et entre lesquelles sont intercalées des plates-formes 14 inter-aubes, le disque 12 étant fixé à l'extrémité amont d'un arbre 13 de turbomachine.

Chaque aube 10 de soufflante comprend une pale 16 raccordée à son extrémité radialement interne à un pied 18 qui est engagé dans une rainure 20 sensiblement axiale de forme complémentaire du disque 12, formée entre deux nervures 22 du disque 12, et permettant de retenir radialement cette aube 10 sur le disque 12. Une cale 24 est intercalée entre le pied 18 de chaque aube 10 et le fond de la rainure 20 correspondante du disque 12 pour immobiliser radialement l'aube 10 sur le disque 12.

Les plates-formes 14 inter-aubes forment une paroi qui délimite intérieurement une veine 26 du flux d'air entrant dans la turbomachine, et comprennent des moyens qui coopèrent avec des moyens correspondants prévus sur le disque 12, entre les rainures 20, pour fixer les plates-formes sur le disque.

Les aubes 10 de soufflante sont retenues axialement dans les rainures 20 du disque 12 par l'intermédiaire de moyens appropriés montés sur le disque 12, en amont et en aval des aubes 10.

Les moyens de retenue situés en amont comprennent un flasque annulaire 28 rapporté et fixé coaxialement sur l'extrémité amont du disque 12.

Le flasque 28 comprend un rebord annulaire interne 30 qui est festonné ou crénelé et qui coopère avec un rebord annulaire externe 32 crénelé ou festonné du disque 12 pour immobiliser axialement le flasque 28 sur le disque 12. Ce flasque 28 prend appui par un rebord externe 34 sur les cales 24 des pieds d'aube 18.

Le flasque 28 comprend en outre une bride annulaire interne 36 qui est intercalée entre une bride annulaire 38 correspondante du disque 12 et une bride annulaire interne 40 d'une virole 42 agencée en amont du disque 12 de soufflante. Les brides 36, 38, 40 comprennent des orifices axiaux (non visibles) de passage de vis 44 ou analogues pour le serrage des brides entre elles.

La virole 42 a une forme sensiblement tronconique s'évasant vers l'aval, la paroi définie par les plates-formes inter-aubes s'étendant dans le prolongement axial de cette virole 42. Cette virole comporte des perçages 46 radiaux pour le montage de vis d'équilibrage ainsi qu'une bride 48 située à son extrémité amont. Un capot 50 de forme conique est monté sur la partie amont de la virole 42. Plus particulièrement, le capot 50 comporte une bride 52 à son extrémité aval, fixée à la bride amont 48 de la virole 42 par l'intermédiaire de vis 54.

En aval de l'aube 10, la retenue axiale est permise par un crochet 120 formé à l'extrémité aval de l'aube 10 et qui s'engage dans une encoche 122 formée à l'extrémité amont d'un compresseur 124 prolongeant la veine 26 en aval de la soufflante.

Une telle structure présente les inconvénients décrits plus haut. En particulier, elle ne convient pas à une soufflante ayant un diamètre relativement faible.

Les figures 3 à 7 illustrent une forme de réalisation d'un rotor de soufflante selon la solution développée dans cette demande de brevet, comportant de la même manière que précédemment, un disque 56 portant des aubes (non représentés) dont les pieds sont engagés dans des rainures 58 sensiblement axiales de la périphérie externe du disque 56.

Le disque comporte une jante 60 annulaire dépourvue de poireaux d'équilibrage et prolongée à l'amont par une partie annulaire comportant une gorge annulaire 62 délimitée entre une face amont de la jante et un rebord radial 64 s'étendant vers l'extérieur. L'extrémité amont de la partie annulaire comporte une bride 66 s'étendant radialement vers l'intérieur et écartée du rebord 64, et comportant, régulièrement répartis sur toute sa circonférence, des trous axiaux 68 de passage de vis 70, 72. Le rebord 64 est festonné ou crénelé et comprend des parties pleines en alternance avec des parties creuses.

Le rotor de soufflante est équipé de moyens de retenue axiale vers l'amont des aubes sur le disque. Ceux-ci comportent un flasque 74 montée dans la gorge annulaire 62 du disque 56 et formant un appui axial des pieds des aubes.

Le flasque 74 comprend une paroi sensiblement tronconique 76 s'évasant vers l'aval, et dont l'épaisseur augmente vers l'aval. Le flasque 74 est délimité à son extrémité aval par une face radiale 78 d'appui contre les aubes. Le flasque 74 comprend à son extrémité aval un rebord annulaire interne 80 qui est festonné ou crénelé et comprend des parties pleines en alternance avec des parties creuses et a des formes sensiblement complémentaires de celles du rebord 64 du disque 56 pour autoriser un montage et un démontage du flasque 74 dans la gorge annulaire 62 par translation axiale, une rotation du flasque 74 par rapport au disque 56, et un blocage axial du flasque 74 dans la gorge 62 du disque par appui des parties pleines du rebord 80 du flasque contre les parties pleines du rebord 64 du disque.

Le flasque 74 comprend enfin des festons 82 ou parties creuses formés en alternance avec des parties pleines 84 sur son bord amont.

Le flasque 74 est immobilisé en rotation au moyen d'un anneau 86 comportant une partie cylindrique 88 délimité par des faces cylindriques interne et externe. La face externe comporte des saillies 90 s'étendant radialement vers l'extérieur et circonférentiellement le long de la dite surface externe de la partie cylindrique 88, et s'insérant dans les festons 82 du bord amont du flasque 74 et réalisant une butée contre les parties pleines 84 du bord amont du flasque 74 pour assurer l'anti-rotation. Le bord amont de l'anneau est relié à des oreilles 92 s'étendant radialement vers l'intérieur, formées avec des trous 94 de passage de vis. Ces oreilles sont en contact axial par l'amont contre la bride 66 du disque 56 de manière à ce que les trous 94 des oreilles 92 soient alignés avec les trous 68 de la bride 66 et la partie cylindrique 88 de l'anneau est en appui axial par l'extérieur contre la bride 66 du disque. L'anneau 86 peut être réalisé en acier fortement allié, de façon à résister à l'arrachement.

Le flasque 74 est ainsi immobilisé en rotation par butée de ses parties pleines 84 contre les saillies 90 de l'anneau.

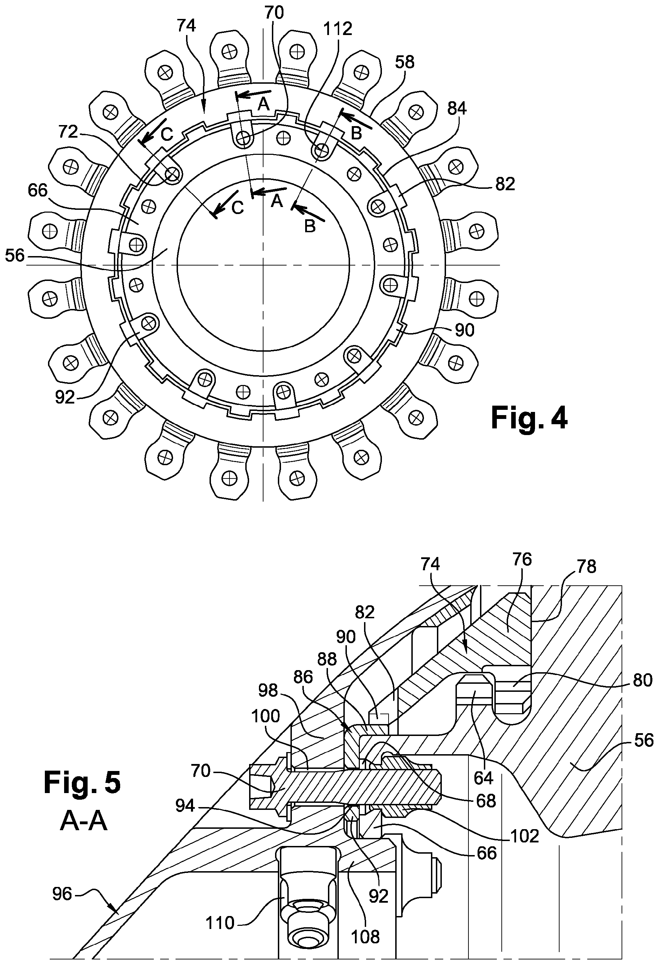

Un capot 96, par exemple en aluminium et de forme conique, est fixé sur le disque 12. Pour cela, le capot 96 comporte, dans sa partie médiane, un rebord annulaire 98 interne dans lequel sont formés des trous axiaux 100 traversants (figure 5), situés en regard d'un trou 94 sur deux de l'anneau 86 alignés avec certains trous 68 de la bride 66 du disque 56. Ces trous 100 sont traversés par les vis 70 coopérant avec des écrous 102 logés contre l'aval de la bride 66 du disque 56 et permettant de fixer ensemble le capot 96, l'anneau 86 et le disque 56. La partie aval du capot 96 recouvre l'anneau 86 et le flasque 74 de façon à ce que la veine intérieure 26 définie par les plates-formes inter-aubes s'étende dans le prolongement axial de la partie aval du capot 96.

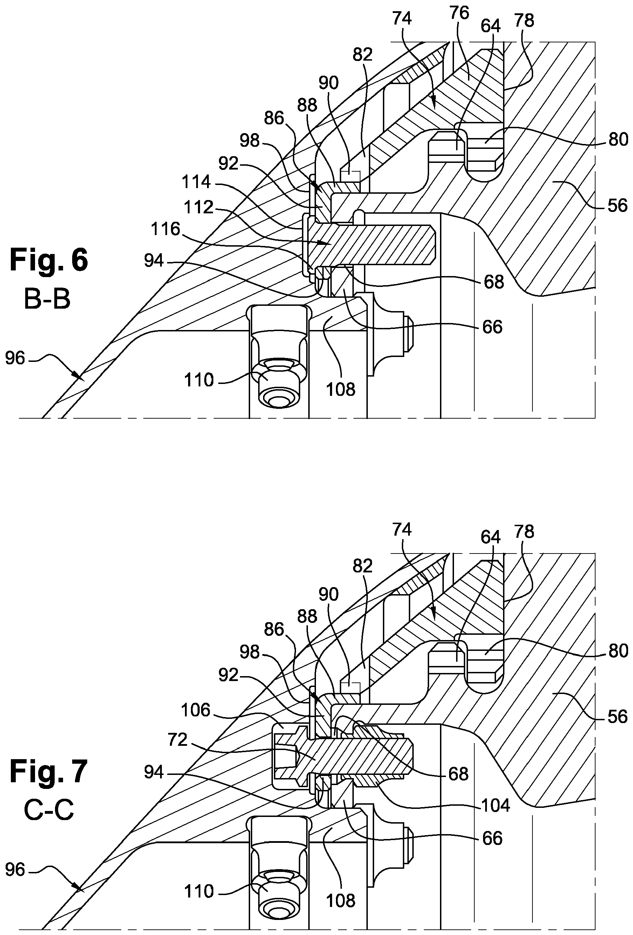

Comme cela est visible en figure 7, tous les autres trous 94 de l'anneau sauf un, situés en regard d'autres trous 68 de la bride 66 du disque 56, sont traversés par des vis 72 coopérant avec des écrous 104 et servant uniquement à la fixation de l'anneau 86 sur le disque 56. Les têtes de ces vis sont logées dans des trous borgnes 106 ménagés dans le rebord interne 98 du capot 96.

Le rebord interne 98 du capot 96 comprend également une collerette cylindrique 108 s'étendant vers l'aval, dont l'extrémité vient en appui contre l'extrémité interne de la bride 66 du disque.

Le capot 96 comporte en outre des filetages radiaux 110 servant au montage de vis d'équilibrage, comme cela est bien connu de l'art antérieur. Afin de garantir la bonne position de ces vis, il est nécessaire d'indexer la position du capot 96 par rapport au rotor de soufflante. Pour cela, comme représenté à la figure 6, un pion d'indexage 112 est monté dans le dernier trou 94 de l'anneau aligné avec un trou 68 de la bride 66 du disque 56. Le pion 112 comporte une tête 116 logée dans un trou borgne 114 du rebord interne 98 du capot 96, le diamètre de la tête 116 du pion 112 étant déterminé de façon à ce qu'il ne puisse pas être inséré dans un autre trou borgne 106, prévu pour le logement des têtes des vis 72.

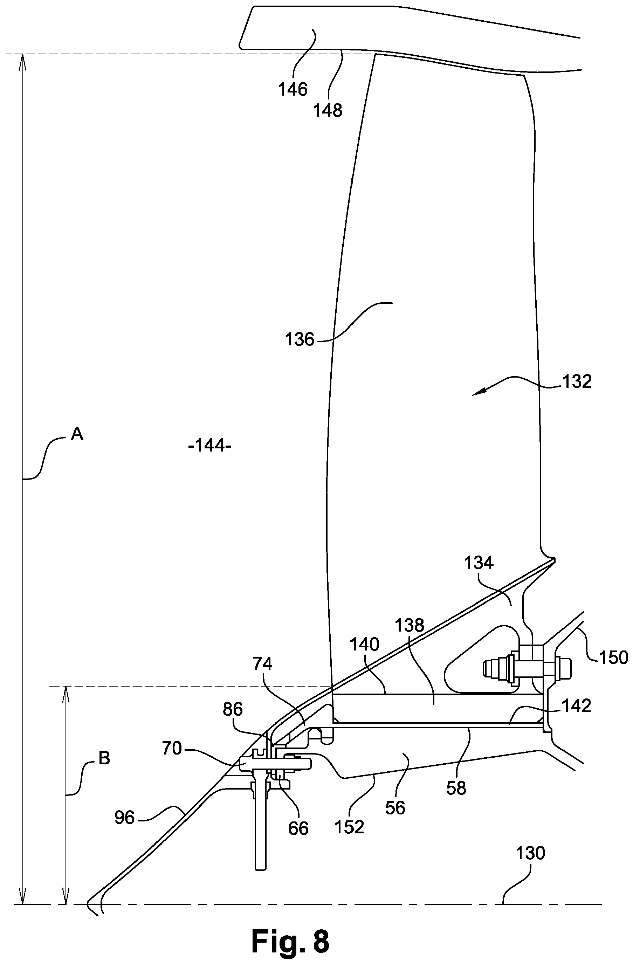

On se réfère maintenant à la figure 8 qui représente une vue d'ensemble à l'échelle de la soufflante selon l'invention, comprenant le rotor décrit ci-dessus. Le disque 56 est agencé autour de l'axe 130 de la turbomachine, et est entrainé en rotation par un arbre d'entrainement aval (non représenté). Des aubes 132, entre lesquelles sont intercalées des plates-formes inter-aubes 134, sont portées par le disque 56.

Chaque aube 132 de soufflante comprend une pale 136 raccordée à son extrémité radialement interne à un pied 138 qui est engagé dans une rainure 58 sensiblement axiale de forme complémentaire du disque 56, formée entre deux nervures 140 du disque 56, et permettant de retenir radialement cette aube 132 sur le disque 56.

Les aubes 132 de soufflante sont retenues axialement dans les rainures 58 du disque 56 par l'intermédiaire des moyens 74, 86, 70, 96 décrits plus haut et agencés en amont des aubes 132.

Une cale 142 est intercalée entre le pied 138 de chaque aube 132 et le fond de la rainure 58 correspondante du disque 56 pour immobiliser radialement l'aube 132 sur le disque 56.

Les plates-formes 134 inter-aubes forment une paroi qui délimite intérieurement la veine 144 du flux d'air entrant dans la turbomachine, et comprennent des moyens qui coopèrent avec des moyens correspondants prévus sur le disque 56, entre les rainures 58, pour fixer les plates-formes sur le disque.

Les aubes 132 sont entourées par un carter annulaire externe 146 délimitant l'entrée d'air de la turbomachine. Le carter externe 146 comprend une paroi annulaire interne 148 délimitant extérieurement la veine 144 du flux d'air entrant dans la turbomachine, et au regard de laquelle les extrémités externes des aubes 132 se déplacent circonférentiellement en rotation.

Le rapport de moyeu de la soufflante représentée correspond au rapport de la distance B entre l'axe 130 de la turbomachine et la limite interne de la veine 144 au niveau du bord d'attaque de l'aube 132, divisé par la distance A entre l'axe 130 de la turbomachine et les extrémités externes des aubes 132. La soufflante représentée en figure 8 a été conçue de manière a obtenir un rapport de moyeu pouvant être compris entre 0.25 et 0.27, alors que la distance A possède une valeur comprise entre 450 et 600 mm. Ce choix de rapport de moyeu implique l'utilisation d'un disque dont la limite externe, aux sommets des nervures, est compris entre 115 mm et 145 mm.

Enfin, comme il a déjà été évoqué plus haut, les moyens 74, 86, 70, 96 de retenue axiale des aubes 132 sont assez efficaces pour que, contrairement à la soufflante de l'art antérieur représentée en figures 1 et 2, la soufflante selon l'invention représentée en figure 8 est dépourvue de crochets de retenue axiale des aubes 132 agencés en aval des aubes 132. Au contraire, comme on peut le voir, le compresseur basse pression 150 agencé en aval du disque 56 de soufflante est directement en appui contre les extrémités aval des pieds d'aubes 138 et des nervures 140 du disque. Il n'existe donc plus de contrainte de profondeur radiale des nervures liée à l'engagement des crochets aval.

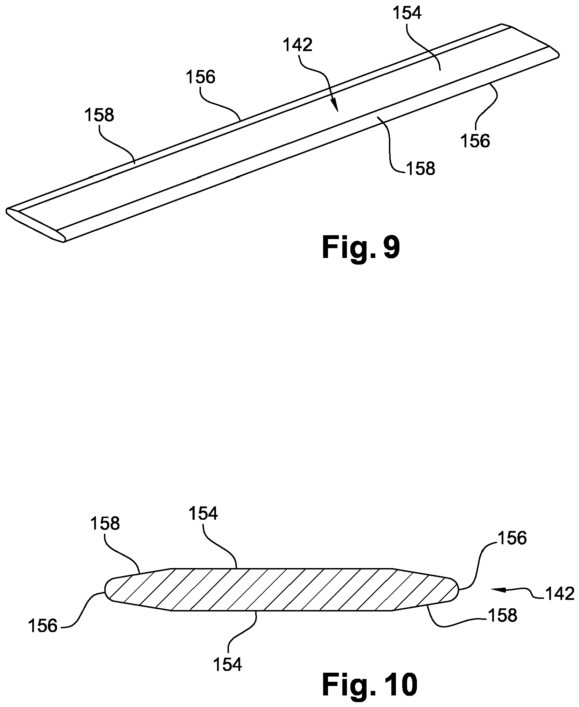

Par conséquent, les rainures 58 sont radialement moins profondes, avec une hauteur comprise entre 18 mm et 22 mm, que les rainures adaptées pour la mise en place d'un crochet de retenu axial des aubes. Les cales 142, utilisées pour maintenir les pieds d'aubes 138 en appui radial contre les nervures 140, sont aussi radialement moins épaisses. Les nervures 140, par le même fait moins allongées, sont alors suffisamment compactes pour résister aux déformations et à la rupture. Ce gain en résistance des nervures 140 autorise à former le disque en un alliage de titane relativement léger par rapport à un alliage d'inconel par exemple. De plus, en considérant la nouvelle répartition de masse du disque qui découle de la modification de la hauteur des rainures, la paroi interne 152 du disque 56 a été formée de manière à présenter un profil d'équilibrage du disque 56 différent que celui de l'art antérieur présentant des poireaux. Ce profil de la paroi 152 est tronconique s'évasant vers l'aval. Proportionnellement au disque, ce profil d'équilibrage s'étend moins que les poireaux vers l'intérieur de la turbomachine, jusqu'à un rayon minimum compris dans le cadre de l'invention entre 60 mm et 70 mm, ce qui représente la limite interne du disque. Ce profil permet donc le passage d'outil plus volumineux dans l'espace d'accès axial par l'amont situé au centre du disque 56, et couramment utilisé lors du montage de la turbomachine. On se réfère maintenant aux figures 9 et 10 qui représentent les cales 142, ces dernières ayant été adaptées à la réduction de profondeur des rainures 58. Chaque cale se présente plus particulièrement sous la forme d'une planche à deux faces 154 allongée selon l'axe de la soufflante, et posée contre le fond d'une des rainures 58. Cette cale est symétrique dans les trois directions axiales, radiales, et circonférentielle, ce qui évite d'éventuelles erreurs de montage. Chaque face de la cale possède ses bords latéraux 156, ou circonférentiels, chanfreinés, les chanfreins 158 formant chacun un angle de 10° avec une face. Les chanfreins 158 de chaque face 154 radialement en vis-à-vis se rejoignent aux extrémités latérales de la cale de manière à former les deux bords latéraux 156 de la cale. Les angles de jonction entre les faces 154 de la cale et les chanfreins 158 sont adoucis de manière à présenter une courbure de rayon compris entre 1,50 mm et 1, 80 mm, et plus particulièrement égal à 1,65 mm. Les angles de jonctions entre les chanfreins 158 respectifs formant les bords latéraux 156 de la cale sont adoucis de manière à présenter une courbure de rayon compris entre 0,45 mm et 0,75 mm, et plus particulièrement égal à 0,6 mm. Chaque cale 142 possède une épaisseur radiale comprise entre 1 mm et 3 mm, plus particulièrement égale à 2 mm, et une dimension latérale comprise entre 17,0 mm et 18,2 mm, plus particulièrement égal à 17,6 mm.

## Revendications

1. Soufflante, en particulier pour turbomachine telle qu'un turboréacteur, comprenant en entrée des aubes (132) de soufflante, un carter annulaire, un moyeu tournant autour d'un axe (130) de la turbomachine et portant les aubes, lesquelles s'étendent radialement par rapport audit axe dans une veine annulaire (144) délimitée intérieurement par le moyeu et extérieurement par le carter annulaire (146), ledit moyeu comprenant un disque de soufflante (56) comportant à sa périphérie externe des nervures (140) sensiblement axiales formées en alternance avec des rainures (58) dans lesquels sont engagés les pieds (138) des aubes, ladite soufflante comprenant un capot (96) annulaire monté sur le disque (56) en amont des aubes (132), et des moyens de retenue axiale des aubes sur le disque comportant un flasque (74) monté dans une gorge annulaire (62) du disque et formant un appui axial des pieds (138) des aubes, le flasque (74) comportant un rebord annulaire radial (80) festonné et coopérant avec un rebord annulaire radial (64) festonnée de la gorge annulaire (62) du disque, de manière à assurer un blocage axial du flasque dans la gorge annulaire du disque, et des moyens d'immobilisation en rotation du flasque (74), comportant un anneau (86) comportant des oreilles (92) s'étendant radialement vers l'intérieur et formées avec des moyens de fixation (68, 94, 70, 72) sur une face radiale amont du disque (56), ledit capot (96) étant fixé sur le disque par des moyens de fixation (100, 68, 94, 70) en partie communs aux moyens de fixation d'au moins certaines oreilles (92) de l'anneau sur le disque, ladite soufflante étant **caractérisée en ce que** ledit anneau (86) comporte en outre au moins une saillie radiale (90) coopérant avec une butée (84) complémentaire du flasque, de manière à bloquer en rotation le flasque (74) par rapport à l'anneau (86), et **en ce que** ladite soufflante possède un diamètre d'entrée (A), qui correspond au diamètre du cercle comprenant les extrémités radialement externes des aubes, de valeur comprise entre 900 mm et 1550 mm, et possédant un rapport de moyeu, qui correspond au rapport du diamètre (B) de la limite interne de la veine au niveau des extrémités radialement internes des bords d'attaques des aubes de soufflante, divisé par le diamètre d'entrée, de valeur comprise entre 0,20 et 0,265.

2. Soufflante selon la revendication 1, **caractérisée en ce que** le diamètre d'entrée est plus particulièrement compris entre 900 mm et 1200 mm.

3. Soufflante selon la revendication 1, **caractérisée en ce que** le disque (56) comprend une bride amont (66) s'étendant vers l'intérieur, et comportant des trous (68) alignés avec des trous (94) des oreilles (92) pour le passage de vis axiales (70, 72) de manière à former les moyens de fixation de l'anneau sur le disque.

4. Soufflante selon la revendication 3, **caractérisée en ce que** l'anneau (86) comprend une partie cylindrique (88) à partir de laquelle les saillies radiales (90) s'étendent radialement vers l'extérieur, les oreilles (92) s'étendant radialement vers l'intérieur depuis le bord amont de la partie cylindrique (88), la partie cylindrique de l'anneau étant en appui radial sur ladite bride (66) du disque.

5. Soufflante selon l'une des revendications 1 à 4, **caractérisée en ce que** les butées (84) du flasque coopérant avec les saillies radiales (90) de l'anneau sont formées par des festons (82) ménagés sur un bord amont du flasque (74).

6. Soufflante selon la revendication 5, **caractérisée en ce que** pour toutes les nervures (140) et pour tous les festons (82), un des festons est ménagé sur le bord amont du flasque en alignement axial avec une des nervures du disque.

7. Soufflante selon l'une des revendications 1 à 6, **caractérisée en ce que** le capot (96) comporte, dans sa partie médiane, un rebord annulaire interne (98) dans lequel sont formés des trous borgnes axiaux (106) débouchant vers l'aval et servant au logement des têtes des vis de fixation (72) de l'anneau sur le disque, et des trous axiaux traversants (100) pour le passage de vis de fixation (70) commune du capot (96) et de l'anneau (86) sur le disque.

8. Soufflante selon l'une des revendications précédentes, **caractérisée en ce que** le disque (56) possède une limite externe, formée par les extrémités externes des nervures (140), dont le diamètre est compris entre 245 mm et 275 mm, et une limite interne, formée par l'extrémité interne d'un profil d'équilibrage du disque, dont le diamètre est compris entre 120 mm et 140 mm.

9. Soufflante selon l'une des revendications précédentes, **caractérisée en ce que** le disque (56) possède une limite externe, formée par les extrémités externes des nervures (140), dont le diamètre est compris entre 245 mm et 275 mm, et **en ce que** les rainures (58) du disque possèdent une dimension radiale, entre le fond des rainures (58) et le sommet des nervures (140), de valeur comprise entre 18 mm et 22 mm.

10. Soufflante selon l'une des revendications précédentes, **caractérisée en ce qu'**une cale (142) d'épaisseur radiale comprise entre 1 mm et 3 mm est intercalée radialement entre un pied d'aube (138) et un fond de rainure (58).

11. Soufflante selon l'une des revendications 8à 10, **caractérisée en ce que** le profil d'équilibrage du disque (56) est formé par un alésage interne dont la forme est tronconique s'évasant vers l'aval, l'extrémité amont de cet alésage formant la limite interne du disque.

12. Soufflante selon l'une des revendications précédentes, **caractérisée en ce que** le disque porte entre 17 et 21 aubes, préférentiellement entre 18 et 20 aubes.

13. Soufflante selon l'une des revendications précédentes, **caractérisée en ce que** le disque est en alliage de titane, et plus particulièrement en alliage TA6V ou TU 7 (TA5CD4).

14. Soufflante selon la revendication 4 seule ou en combinaison avec l'une quelconque des revendications 5 à 7, **caractérisée en ce que** la partie cylindrique (88) de l'anneau (86) comprend une face cylindrique interne et une face cylindrique externe à partir de laquelle plusieurs dites saillies radiales (90) s'étendent régulièrement radialement vers l'extérieur, chaque oreille étant localisée sensiblement entre chaque couple de saillies adjacentes.

15. Flasque annulaire (74) pour soufflante selon l'une des revendications 1 à 7, **caractérisé en ce qu'**il comprend une paroi sensiblement tronconique (76) d'épaisseur variable :
- comprenant à une extrémité de diamètre le plus grand un rebord annulaire (80) qui s'étend vers l'intérieur et qui est festonné régulièrement,
- et dont une extrémité de diamètre le plus petit est festonnée régulièrement.

16. Turbomachine, telle qu'un turboréacteur, **caractérisée en ce qu'**elle comporte une soufflante selon l'une des revendications1 à 14.

## Patentansprüche

1. Gebläse, insbesondere für eine Turbomaschine, wie zum Beispiel ein Turbostrahltriebwerk, welches am Eingang Gebläseschaufeln (132) umfasst, ein ringförmiges Gehäuse, eine um eine Achse (130) der Turbomaschine rotierende, die Schaufeln tragende Nabe, wobei sich diese in Bezug auf die Achse radial in einem ringförmigen Kanal (144) erstrecken, der innen durch die Nabe und außen durch das ringförmige Gehäuse (146) abgegrenzt wird, wobei die Nabe eine Gebläsescheibe (56) umfasst, die an ihrem äußeren Rand im Wesentlichen axiale Rippen (140) umfasst, die im Wechsel mit den Rillen (58) geformt sind, in welche die Füße (138) der Schaufeln eingreifen, wobei das Gebläse eine stromaufwärts der Schaufeln (102 30) auf die Scheibe (56) montierte ringförmige Abdeckung umfasst, und axiale Rückhaltemittel für die Schaufeln auf der Scheibe, die einen Flansch (74) umfassen, der in eine ringförmige Nut (62) der Scheibe montiert ist und eine axiale Auflage für die Schaufelfüße (138) bildet, wobei der Flansch (74) einen geschweiften radialen ringförmigen Rand (80) umfasst, der mit einem geschweiften radialen ringförmigen Rand (64) der ringförmigen Nut (62) der Scheibe zusammenwirkt, sodass der Flansch in der ringförmigen Nut der Scheibe axial blockiert wird, und Mittel zum Blockieren der Drehbewegung des Flansches (74), welche einen Ring (86) mit Ansätzen (92) umfassen, die sich radial nach innen erstrecken und mit Befestigungsmitteln (68, 94, 70, 72) an einer stromaufwärtigen radialen Fläche der Scheibe (56) gebildet werden, wobei die Abdeckung (96) mit Befestigungsmitteln (100, 68, 94, 70) auf der Scheibe befestigt ist, die teilweise auch zur Befestigung von zumindest einigen Ansätzen (92) des Ringes auf der Scheibe verwendet werden, wobei das Gebläse **dadurch gekennzeichnet ist, dass** der Ring (86) des Weiteren zumindest einen radialen Vorsprung (90) umfasst, der mit einem komplementären Anschlag (84) des Flansches zusammenwirkt, sodass die Drehbewegung des Flansches (74) in Bezug auf den Ring (86) blockiert wird, und dadurch, dass das Gebläse einen Eintrittsdurchmesser (A) hat, der dem Durchmesser des Kreises mit den radial äußeren Enden der Schaufeln entspricht und 900 mm bis 1550 mm groß ist, und ein Nabenverhältnis aufweist, das dem Verhältnis des Durchmessers (B) der inneren Begrenzung des Kanals an den radial inneren Enden der Vorderkanten der Gebläseschaufeln geteilt durch den Eintrittsdurchmesser entspricht, mit einem Wert zwischen 0,20 und 0,265 hat.

2. Gebläse nach Anspruch 1, **dadurch gekennzeichnet, dass** der Eintrittsdurchmesser insbesondere 900 mm bis 1200 mm groß ist.

3. Gebläse nach Anspruch 1, **dadurch gekennzeichnet, dass** die Scheibe (56) einen stromaufwärtigen Flansch (66) umfasst, der sich nach innen erstreckt und Löcher (68) umfasst, die auf die Löcher (94) der Ansätze (92) ausgerichtet sind, damit axiale Schrauben (70, 72) so hindurchgeführt werden können, dass sie die Befestigungsmittel des Rings auf der Scheibe bilden.

4. Gebläse nach Anspruch 3, **dadurch gekennzeichnet, dass** der Ring (86) einen zylindrischen Teil (88) umfasst, von dem aus sich die radialen Vorsprünge (90) radial nach außen erstrecken, wobei sich die Ansätze (92) von der stromaufwärtigen Kante des zylindrischen Teils (88) radial nach innen erstrecken, wobei der zylindrische Teil des Rings radial auf dem Flansch (66) der Scheibe aufliegt.

5. Gebläse nach einem der Ansprüche 1 bis 4, **dadurch gekennzeichnet, dass** die Anschläge (84) des Flansches, der mit den radialen Vorsprüngen (90) des Rings zusammenwirkt, aus geschweiften Kanten (82) gebildet werden, die auf einer stromaufwärtigen Kante des Flansches (74) ausgebildet sind.

6. Gebläse nach Anspruch 5, **dadurch gekennzeichnet, dass** von allen Rippen (140) und von allen geschweiften Kanten (82) eine der geschweiften Kanten an der stromaufwärtigen Kante des Flansches axial auf eine der Rippen der Scheibe ausgerichtet ausgebildet ist.

7. Gebläse nach einem der Ansprüche 1 bis 6, **dadurch gekennzeichnet, dass** die Abdeckung (96) in ihrem mittleren Teil einen ringförmigen inneren Rand (98) umfasst, in dem axiale Sacklöcher (106) ausgebildet sind, die stromabwärts geführt werden und zur Aufnahme der Köpfe der Befestigungsschrauben (72) des Rings auf der Scheibe dienen, und axiale Durchgangslöcher (100) zum Durchführen von Befestigungsschrauben (70), die auch für die Abdeckung (96) und den Ring (86) auf der Scheibe verwendet werden.

8. Gebläse nach einem der vorhergehenden Ansprüche, **dadurch gekennzeichnet, dass** die Scheibe (56) einer äußere, durch die äußeren Enden der Rippen (140) gebildete Begrenzung mit einem Durchmesser von 245 mm bis 275 mm aufweist, und eine, durch das innere Ende eines Ausgleichsprofils der Scheibe gebildete innere Begrenzung mit einem Durchmesser von 120 mm bis 140 mm.

9. Gebläse nach einem der vorhergehenden Ansprüche, **dadurch gekennzeichnet, dass** die Scheibe (56) eine äußere, durch die äußeren Enden der Rippen (140) gebildete Begrenzung mit einem Durchmesser zwischen 245 mm und 275 mm aufweist, und dadurch, dass die Rillen (58) der Scheibe zwischen dem Grund der Rillen (58) und dem Scheitelpunkt der Rippen (140) eine radiale Abmessung von 18 mm bis 20 mm aufweisen.

10. Gebläse nach einem der vorhergehenden Ansprüche, **dadurch gekennzeichnet, dass** ein Distanzstück (142) mit einer radialen Dicke von 1 mm bis 3 mm radial zwischen einen Schaufelfuß (138) und einen Rillengrund (58) eingefügt wird.

11. Gebläse nach einem der Ansprüche 8 bis 10, **dadurch gekennzeichnet, dass** das Ausgleichsprofil der Scheibe (56) durch eine innere Bohrung gebildet wird, deren Form sich konusförmig stromabwärtig erweitert, wobei das stromaufwärtige Ende dieser Bohrung die innere Begrenzung der Scheibe bildet.

12. Gebläse nach einem der vorhergehenden Ansprüche, **dadurch gekennzeichnet, dass** die Scheibe 17 bis 21 Schaufeln, vorzugsweise aber 18 bis 20 Schaufeln trägt.

13. Gebläse nach einem der vorhergehenden Ansprüche, **dadurch gekennzeichnet, dass** die Scheibe aus einer Titanlegierung besteht, und insbesondere einer Legierung TA6V oder TU 7 (TA5CD4).

14. Gebläse nach Anspruch 4, oder Anspruch 4 und einem der Ansprüche 5 bis 7, **dadurch gekennzeichnet, dass** der zylindrische Teil (88) des Rings (86) mit einer zylindrischen Innenseite und einer zylindrischen Außenseite umfasst, von der aus sich mehrere radiale Vorsprünge (90) des Rings (86) regelmäßig radial nach außen erstrecken, wobei sich jeder Ansatz im Wesentlichen zwischen jedem Paar nebeneinanderliegender Vorsprünge befindet.

15. Ringförmiger Flansch (74) für ein Gebläse nach einem der Ansprüche 1 bis 7, **dadurch gekennzeichnet, dass** er eine im Wesentlichen konusförmige Wand (76) mit veränderlicher Dicke umfasst:
- die an einem Ende mit dem größten Durchmesser einen ringförmigen Rand umfasst, der sich nach innen erstreckt und gleichmäßig geschweift ist,
- und deren Ende mit dem kleinsten Durchmesser gleichmäßig geschweift ist.

16. Turbomaschine, wie zum Beispiel ein Turbostrahltriebwerk, **dadurch gekennzeichnet, dass** sie ein Gebläse nach einem der Ansprüche 1 bis 14 umfasst.

## Claims

1. A fan, particularly for a turbine engine such as a turbojet, comprising at the inlet fan blades (132), an annular casing, a hub rotating about an axis (130) of the turbine engine and carrying the blades, which extend radially relative to said axis in an annular section (144) delimited internally by the hub and externally by the annular casing (146), with said hub comprising a fan disc (56) having, at its outer periphery, substantially axial ribs (140) alternating with grooves (58) wherein the roots (138) of the blades are engaged, with said fan comprising an annular cover (96) mounted on the disc (56) upstream of the blades (132), and means for axially retaining the blades on the disc comprising a flange (74) mounted in an annular groove (62) of the disc and forming an axial support for the roots (138) of the blades, with the flange (74) comprising a curled radial annular rim (80) cooperating with a curled radial annular rim (64) of the annular groove (62) of the disc, so as to ensure the axial locking of the flange in the annular groove of the disc, and means for rotationally locking the flange (74), comprising a ring (86) having lugs (92) extending radially inwards and formed with fixing means (68, 94, 70, 72) on an upstream radial face of the disc (56), with said cover (96) being fixed on the disc by fixing means (100, 68, 94, 70) partly common to the means for fixing at least some lugs (92) of the ring on the disc, said fan being **characterized in that** said ring (86) further comprises at least one radial projection (90) cooperating with a stop (84) matching the flange, so as to rotationally lock the flange (74) relative to the ring (86), and **in that** said fan has an inlet diameter (A) matching the diameter of the circle comprising the radially external ends of the blades having a value between 900mm and 1,550mm, and having a hub ratio, which matches the ratio of the diameter (B) of the inner limit of the section at the radially internal ends of the leading edges of the fan blades divided by the inlet diameter, having a value between 0.20 and 0.265,

2. A fan according to claim 1, **characterized in that** the inlet diameter is more particularly comprised between 900mm and 1,200mm.

3. A fan according to claim 1, **characterized in that** the disc (56) comprises an upstream clamp (66) extending inwards and having holes (68) aligned with holes (94) in the lugs (92) for the passage of axial screws (70, 72) so as to form the means for fixing the ring on the disc.

4. A fan according to claim 3, **characterized in that** the ring (86) comprises a cylindrical portion (88) from which the radial projections (90) radially extend outwards, with the lugs (92) radially extending inwards from the upstream edge of the cylindrical portion (88), with the cylindrical portion of the ring being radially supported on said clamp (66) of the disc.

5. A fan according to one of claims 1 to 4, **characterized in that** the stops (84) of the flange cooperating with the radial projections (90) of the ring are formed by curls (82) provided on an upstream edge of the flange (74).

6. A fan according to claim 5, **characterized in that** for all the ribs (140) and for all the curls (82), one of the curls is formed on the upstream edge of the flange in axial alignment with one of the ribs of the disc.

7. A fan according to one of claims 1 to 6, **characterized in that** the cover (96) has in its central part, an inner annular rim (98) wherein axial blind holes (106) are formed which open downstream and are used for housing fixing screw heads (72) of the ring on the disc, and axial through-holes (100) for the passage of the common fixing screw (70) of the cover (96) and of the ring (86) on the disc.

8. A fan according to one of the preceding claims, **characterized in that** the disc (56) has an outer limit formed by the external ends of the ribs (140), the diameter of which is between 245mm and 275mm, and an inner limit formed by the internal end of a disc balancing profile, the diameter of which ranges from 120mm to 140mm.

9. A fan according to one of the preceding claims, **characterized in that** the disc (56) has an outer limit formed by the external ends of the ribs (140), the diameter of which is between 245mm and 275mm, and **in that** the grooves (58) of the disc have a radial dimension, between the bottom of the grooves (58) and the top of the ribs (140) with a value ranging from 18mm to 22mm.

10. A fan according to one of the preceding claims, **characterized in that** a shim (142) having a radial thickness ranging from 1mm to 3mm is radially inserted between a blade root (138) and a groove bottom (58).

11. A fan according to one of claims 8 to 10, **characterized in that** the disc balancing profile (56) is formed by an internal bore, the frusto-conical shape of which widens in the downstream direction, with the upstream end of the bore forming the inner limit of the disc.

12. A fan according to one of the preceding claims, **characterized in that** the disc carries from 17 to 21 blades, preferentially from 18 to 20 blades.

13. A fan according to one of the preceding claims, **characterized in that** the disc is made of a titanium alloy, and more particularly a TA6V or Ti17 (TA5CD4) alloy.

14. A fan according to claim 4 alone or in combination with any of claims 5 to 7, **characterized in that** the cylindrical portion (88) of the ring (86) comprises an inner cylindrical face and an outer cylindrical face from which several said radial projections (90) regularly extend radially outwards, with each lug being located substantially between each pair of adjacent projections.

15. An annular flange (74) for a fan according to one of claims 1 to 7, **characterised in that** it comprises a substantially frusto-conical wall (76) of a variable thickness:
- comprising at an end with the larger diameter an annular rim (80) extending inwards and being regularly curled,
- and an end with the smaller diameter of which is regularly curled.

16. A turbine engine such as a turbojet engine, **characterized in that** it comprises a fan according to one of claims 1 to 14.
